# EUROPEAN PATENT APPLICATION

(11) **EP 0 776 099 A2**
(43) Date of publication of application: **28.05.1997**
(21) Application number: 96308151.8
(22) Date of filing: 12.11.1996
(51) Int. Cl.: H04B 1/707, H04B 7/26

(54) **Code division multiple access mobile radio system**

(30) Priority: 21.11.1995 GB 9523760
(71) Applicant: AT&T Corp., New York, NY 10013-2412 (US)
(72) Inventor: Gordon, Malcolm, Weston, Bath, Avon (GB); Pulley, Douglas Roger, Bath, Avon (GB); Martin, Anthony, Chippenham, Wiltshire (GB)
(74) Representative: Watts, Christopher Malcolm Kelway, Dr.

(57) **Abstract**

The capacity of a code division multiple-access (CDMA) net used for a radio local loop system can be increased by exploiting the fixed nature of subscriber stations (3). Orthogonal spreading codes are used for both the forward (12,16) and reverse links (17) and the transmissions from the subscriber stations (3) are adjusted so that signals received at the base station (1) from the subscriber stations (3) are synchronised with respect to their spreading codes to within a chip period. Accurate synchronisation, time control and carrier frequency error compensation of the code division multiple access transmissions from multiple subscriber stations (3) reduces the level of multiple access interference experienced on the reverse link (17) (from subscriber to base station) which is normally the principal limiting factor on the capacity of a system employing CDMA.

## Description

### Technical Field

This invention relates to code-division multiple access (CDMA) nets, and more particularly, to methods of improving the capacity of such nets in a radio local loop system.

### Background of the Invention

The use of code division is well known as a means of managing multiple access to a radio band for mobile communications. For example, see Klein S. Gilhousen, *On the Capacity of a Cellular CDMA System -* IEEE Transactions on Vehicular Technology, vol. 40, no. 2, May 1991, pages 303-312. In such a system each subscriber is allocated a code which is used to encode the signal prior to transmission.

The technique which will be particularly discussed in this specification is known as 'direct-sequence code division multiple access' (DS-CDMA). In this technique the traffic bearer is multiplied by a serial code at a rate known as the 'chip rate' (W) which is greater than the bit rate (R) by some factor (W/R) known as the 'spreading gain'. The resulting signal is recovered, in the presence of other co-frequency signals, by correlation with the spreading code.

In the forward link (from base station to subscriber station) orthogonal codes can be used to minimise cross-talk. However, in the reverse link (that from subscribers to base station), owing to the subscribers' mobility, the relative phases of the spreading process of each subscriber relative to the others as received at the base station can take any value. This means that unwanted co-frequency channels manifest themselves as noise power in the wanted channel.

A local loop is the portion of a telecommunications system which connects a local exchange to the subscribers. Conventionally this is done by means of wires or optical fibres, but a radio link is another possibility. If subscriber stations are mobile, a radio link has to be used, but there are advantages even for static subscribers.

For example, lines can be installed, changed and maintained without having to dig up pavements or erect and climb telegraph poles. A radio local loop involves a base station which transmits and receives radio signals at a location which is determined by signal strengths and reception conditions and is not necessarily near to the local telephone exchange, and subscriber units located at subscriber premises, each of which includes an antenna whose location is determined by considerations of signal reception and transmission and a connection to the subscriber's equipment (telephone, fax, computer etc.).

### Summary of the Invention

According to the invention there is provided apparatus and a method as set out in the independent claims.

In an environment where the subscribers stations are fixed in location relative to the base station synchronisation and time control of the subscribers can allow a system to approach ideal orthogonality with a consequent increase in capacity. A beneficial consequence of approaching orthogonality is the relaxation of the reverse link accurate power control requirement which is expensive and inconvenient to implement in conventional CDMA systems.

To approach the performance of a fully-orthogonal CDMA system, signals received from each transmitting subscriber station are closely time-aligned such that symbol boundaries of all subscriber stations' transmissions as received at the base station lie within a time interval defined as the chip period (the reciprocal of the chip rate). The mechanisms employed to achieve this in the apparatus to be described herein are: synchronisation of the chipping rate and code phase at each subscriber unit; equalisation of radio transmission delay from each subscriber to the base station at the subscriber unit to within a chip period of each other; the measurement of radio transmission delays by the base station to perform this equalisation by the use of a pseudo-noise sequence transmitted by the subscriber unit on demand during idle periods to ensure correct operation of random access attempts by the subscriber unit and the use of the subscriber unit's CDMA transmissions during a call to provide closed loop control of the delay equalisation for during call to account for any slight variations with time of the delay; and accurately aligning the carrier frequency at the subscriber station with that of the base station for reliable demodulation and compensation of CDMA signals prior to transmission by the subscriber unit so that the base station experiences negligible carrier frequency error in CDMA signals received from each subscriber. This may be achieved by carrier frequency error estimation by the subscriber unit and the subsequent compensation of the CDMA signals received by the subscriber unit, but that may not be necessary if sufficiently stable oscillators are used in both base station and subscriber unit.

The resultant performance of the CDMA reverse link provides superior capacity to that which would otherwise be achieved and reduces the accuracy of reverse link power control required to avoid limiting the maximum capacity.

### Brief Description of the Drawings

An embodiment of the invention will now be described by way of example with reference to the accompanying drawings in which:
FIG. 1 is a block diagram showing the structure of a base station and one of the subscriber stations embodying the invention, and
FIG. 2 is a control diagram illustrating how the radio transmission delay is measured and adjusted in the apparatus of FIG. 1.

### Detailed Description

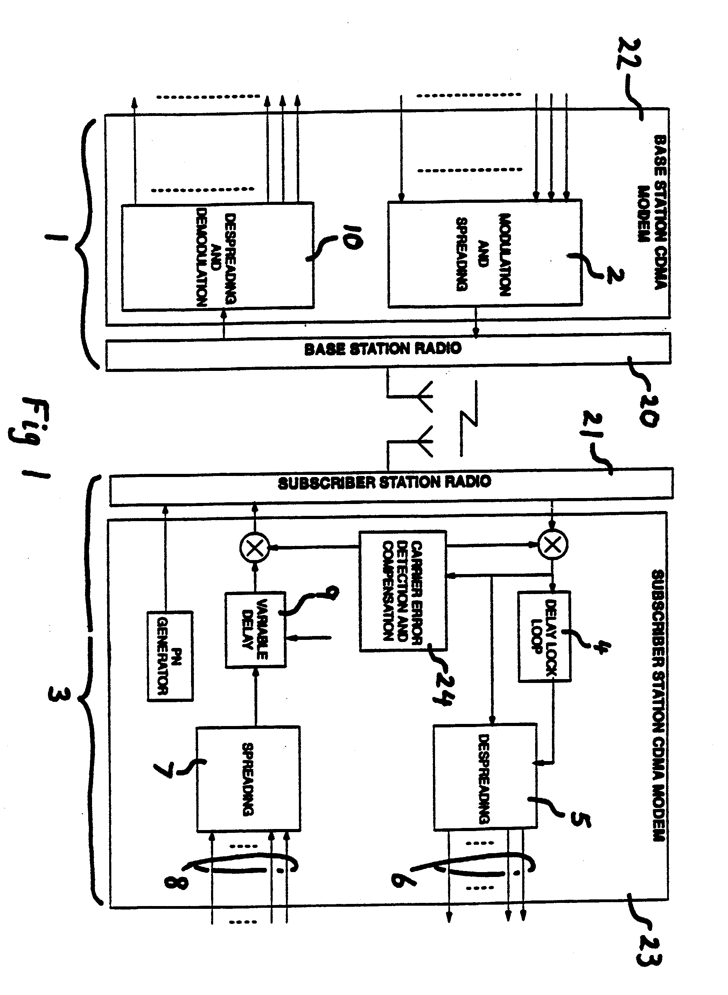

As shown in FIG. 1, the base station 1 contains a modulation and spreading device 2 that takes the traffic channels to be transmitted and modulates them, for example by bipolar phase-shift keying (BPSK) or quadrature phase-shift keying (QPSK), and spreads them with the spreading code appropriate to each traffic channel. This traffic may already have been encrypted for security and/or encoded for forward error correction. The spreading code is the modulo-2 sum of two codes: A randomising code particular to that base station 1 that ensures that the emissions from different base stations are uncorrelated; An orthogonal code (e.g. Radamacher-Walsh) particular to the traffic channel on that base station that ensures that all traffic channels on that base station are orthogonal to each other (since they are inherently perfectly time-aligned at source).

As in a conventional CDMA system the subscriber station 3 contains a delay lock loop 4 - a device that synchronises to the pilot (an unmodulated spreading code) providing spreading rate and code phase synchronisation for the despreader and demodulator block 5 to recover the transmitted traffic 6 which may then be passed to a decoder for error correction and then de-encryption (optional and not shown).

The subscriber station 3 also contains a modulation and spreading device 7 that takes the traffic channels to be transmitted 8 and modulates them (e.g. BPSK or QPSK though not necessarily the same modulation as the forward link) and spreads them with the spreading code appropriate to each traffic channel. This traffic may also have already been encrypted for security and/or encoded for forward error correction. The spreading code is formed in the same manner as the forward link. The modulation and spreading operations are performed synchronously to the data rate and chip rate of the received forward link signal and are then passed to a programmable time delay circuit 9. Each subscriber unit can be remotely instructed by the base station with an appropriate electronic delay in the reverse signal path to ensure that the modulation symbols of each subscriber unit are received by the base station time-aligned to within one chip period.

The base station 1 contains a despreader and demodulator 10, which separates the channels from the various base stations in the conventional way except that, since the transmissions from the subscriber stations have been delayed by an appropriate amount so that the spreading codes are received in synchronism, and since the spreading codes are orthogonal, cross-channel interference is reduced.

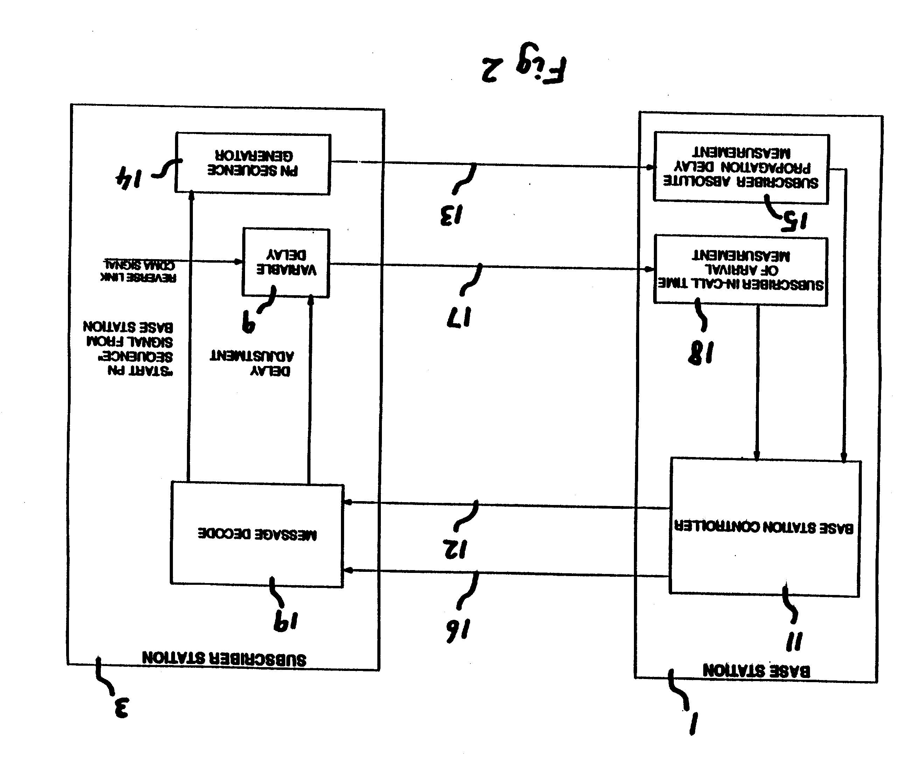

As shown in FIG. 2, two mechanisms exist to perform the control of each subscriber unit delay block 9 to achieve the appropriate adjustment for each subscriber: Periodic absolute measurement and equalisation of the propagation delay of idle (not in-call) subscriber units to ensure correct alignment with other transmitting units during random access and call setup; In-call equalisation adjustments to maintain sufficiently accurate equalisation for the duration of the call.

In the first mechanism, the base station controller 11 sends a message unit via the forward link control channel 12 to each subscriber unit in turn, requesting the subscriber unit modem to emit a pseudo-noise sequence 13 synchronised to message receipt over the radio path. Each subscriber unit contains a pseudo-random sequence generator 14 for this purpose. The base station 1 uses the received pseudo-random sequence to measure the propagation delay between the subscriber unit 3 and the base station (block 15). The base station controller 11 can then send a second message containing the appropriate delay to be programmed into the delay block 9. This mechanism is used to calibrate the delay equalisation of the subscriber unit on a regular basis to ensure that acquisition of the subscriber's transmissions during random access attempts made by the subscriber can be readily achieved.

The second mechanism provides closed loop adjustment of the reverse link radio transmission delay equalisation of any subscriber unit that is actually involved in a call. The reverse link traffic channels 17 are monitored by the base station 1 and the time delays of the various in-call subscriber stations are tracked (block 18). Some of the traffic channels 16 transmitted by the base station are dedicated to carrying periodically updated time delay equalisation messages to transmitting subscriber units. Subscriber units currently involved in calls decode these channels (block 19) and use the parts of this information specific to their own transmissions to adjust their electronic time delay by small increments relative to their previous value to maintain sufficiently accurate equalisation whilst in-call.

Additionally, the radio transceiver sections 20,21 of base station and subscriber unit are each controlled by their own reference oscillator for establishing the forward and reverse link centre frequencies (which are different in a frequency division duplex system). These may drift with time and temperature both from their nominal value and from each other causing significant carrier frequency errors to be experienced in the receive section of either modem 22,23 (particularly at microwave transmission frequencies). If this error were allowed to grow large relative to the symbol rate over the radio path, unacceptable degradation of the despreading process and inferior system performance would result. The subscriber modem therefore contains a device 24 for determining this carrier frequency error to within a small fraction of the symbol rate and compensating for it in the forward link receive path by multiplying the incoming signal with a vector of the opposite sense prior to despreading the received signal.

In the reverse link the frequency error of each traffic channel will be due to the relevant subscriber unit's reference oscillator error and the base station reference oscillator error and thus compensation is applied in a similar manner to the reverse link signal prior to transmission by the radio unit in the subscriber unit so that the signal from each subscriber unit appears to have negligible frequency error after it has passed through both radio units. Again, if this were not performed, the degradation of the despreading process would result in increased multiple access interference and thus inferior system performance.

It will be appreciated that a number of details of the base station and subscriber station have been omitted where they are not relevant to the invention. For example, the reverse link power control can be of generally conventional form, though it does not need to be capable of such a degree of accuracy.

Although a specific embodiment of the invention has been particularly described it will be understood that the scope of the invention is not limited by details thereof, but is defined by the claims.

## Claims

1. A base station for use in a code-division multiple access radio local loop system, said system having a plurality of fixed-location subscriber stations,
CHARACTERISED IN THAT
said base station is arranged to employ spreading codes for links between the base station and the subscriber stations which are orthogonal to one another, both in the forward and reverse links and
said base station comprises means (11,15,18) for controlling the subscriber stations so that signals received at the base station from the subscriber stations are synchronised with respect to their spreading codes to within a chip period.

2. A base station as claimed in claim 8 wherein said means for controlling includes means (11,15,18) for monitoring transmission delays between the respective subscriber stations and the base station.

3. A base station as claimed in claim 2 wherein said means for monitoring transmission delays includes means (11,18) for monitoring said signals received at the base station from subscriber stations involved in calls.

4. A base station as claimed in claim 2 or claim 3 wherein said means for monitoring transmission delays includes means (11) for sending signals from the base station in turn to subscriber stations not involved in calls requesting the transmission of a predetermined signal and means (15) for measuring the delay in receiving each said predetermined signal.

5. A base station as claimed in claim 4 wherein said means for sending signals requesting the transmission of a predetermined signal are arranged to send said signals via a forward link control channel (12).

6. A subscriber station for use in a code-division multiple access radio local loop system, said system comprising a base station and a plurality of fixedlocation subscriber stations,
CHARACTERISED IN THAT
said subscriber station is arranged to employ, both in the forward and reverse links with the base station, a spreading code from a set of orthogonal codes and
said subscriber station comprises means (9) for adjusting its transmission timing so that signals received at the base station from the subscriber stations are synchronised with respect to their spreading codes to within a chip period.

7. A subscriber station as claimed in claim 6 wherein said means for adjusting comprises a variable delay means (9) connected to delay the spread signal prior to transmission.

8. A subscriber station as claimed in claim 6 or claim 7 wherein said means for adjusting is responsive to a control signal sent from the base station.

9. A subscriber station as claimed in any of claims 6 to 8 including means (14) responsive to a control signal from the base station to transmit a predetermined signal for monitoring the transmission delay between the base station and the subscriber station.
